# EUROPÄISCHE PATENTSCHRIFT

(11) **EP 2 892 704 B1**
(45) Veröffentlichungstag und Bekanntmachung des Hinweises auf die Patenterteilung: **22.06.2016**
(21) Anmeldenummer: 13759969.2
(22) Anmeldetag: 03.09.2013
(51) Int. Cl.: B29C 45/28

(54) **HEISSKANALDÜSE ZUM EINSPRITZEN VON THERMOPLASTISCHEM KUNSTSTOFF IN EIN FORMWERKZEUG**
HOTRUNNER NOZZLE FOR INJECTING THERMOPLASTICS INTO A MOULD
BUSE À CANAL CHAUD D'INJECTION DE MATIERE THERMOPLASTIQUE DANS UN MOULE

(30) Priorität: 04.09.2012 CH 15742012
(43) Veröffentlichungstag der Anmeldung: 15.07.2015
(73) Patentinhaber: Schöttli AG, 8253 Diessenhofen (CH)
(72) Erfinder: MANZ, Willi, CH-8460 Marthalen (CH)
(74) Vertreter: BOVARD AG
(86) Internationale Anmeldenummer: PCT/CH2013/000155
(87) Internationale Veröffentlichungsnummer: WO 2014/036663

(56) Entgegenhaltungen:
- WO-A1-98/56557
- DE-A1- 4 021 782
- JP-A- H06 238 704
- JP-A- H07 144 347
- US-A- 4 712 995
- US-A1- 2009 324 767
- US-B1- 6 398 541

## Beschreibung

Gegenstand der Erfindung ist eine Heisskanaldüse zum Einspritzen von thermoplastischem Kunststoff in ein Formwerkzeug gemäss des Patentanspruchs 1.

Heisskanaldüsen ermöglichen es, die Schmelze von spritzbaren Kunststoffen in engen Temperaturbereichen den Kavitäten in einem Spritzgusswerkzeug zuzuführen. Dabei ist darauf zu achten, dass beim Öffnen des Werkzeugs, das heisst beim Auseinanderfahren der Formhälften nach dem Erstarren der Spritzlinge, einspeiseseitig noch flüssige Kunststoffschmelze aus der Heisskanaldüse austreten kann. Zu diesem Zweck wird die Heisskanaldüse durch eine Nadel verschlossen. Dazu wird in die Düsenöffnung beziehungsweise das Ausgussloch in Flussrichtung der Schmelze die Nadel von hinten in das Ausgussloch eingeführt.
Die meisten bekannten Heisskanaldüsen weisen Nadeln auf, die im Zentrum des Schmelzekanals axial verschiebbar angeordnet sind. Dies bedeutet, dass die Schmelze immer über eine bestimmte Kanallänge parallel zur Düsennadel geführt wird. Um die Position der Düsennadel im Bereich der Düsenöffnung, die meist nur ca. 1,2mm Durchmesser aufweist, halten zu können, weist die Nadel im hinteren Bereich einen Durchmesser von 4 oder 5 mm auf. Nur das vordere Ende der Nadel ist entsprechend mit einem geringeren Durchmesser versehen, damit dieses in die Düsenöffnung eindringen kann. Solche Düsennadeln haben den Nachteil, dass sie einerseits einen notwendigerweise grossen Durchmesser und andererseits folglich eine grosse Masse aufweisen, die innert kürzester Zeit beim Schliessen und Öffnen bewegt werden muss. Zudem ergeben sich aus der grossen Projektionsfläche bei Drücken in der Schmelze von bis zu 2500bar zusätzlich hohe Kräfte aus dem Gegendruck der Schmelze, die beim Schliessen überwunden werden müssen. Hohe Verschliesskräfte benötigen entsprechend leistungsstarke und folglich volumenmässig grosse Antriebe für die Düsennadeln. Im Weiteren wirkt sich die Verwirbelung der Schmelze entlang der Düsennadel negativ aus. Diese Antriebe in einer Spritzgussform mit einer Vielzahl von Kavitäten unterzubringen, ist aufwendig und die Kavitäten können nicht so nahe beieinander angeordnet werden, wie dies wünschenswert wäre.
Aus der DE 40 21 782 A1 ist eine weitere Heisskanaldüse mit einem Nadelventil bekannt, bei welchem die Nadel in einem spitzen Winkel und in einem separaten Rohr seitlich zum Schmelzekanal geführt wird. Das Rohr mit der Nadel mündet in geringem Abstand zur Düsenöffnung in den Schmelzekanal, derart, dass die Nadel am Ende des Einspritzvorgangs in spitzem Winkel von hinten durch einen konischen Einlassbereich vor die zylindrische Düsenbohrung einschiebbar ist und den Schmelzefluss stoppt. Zwar tritt bei dieser Vorrichtung keine unerwünschte Verwirbelung der Kunststoffschmelze während des Einspritzvorgangs auf, da diese nicht mehr entlang der Nadel im Schmelzekanal geführt werden muss, jedoch kann das vordere Ende der Nadel die Düsenöffnung nur entlang einer Kontaktlinie schliessen, nicht jedoch in den zylindrischen Düsenkanal eindringen. Dies bewirkt, dass der Querschnitt der Düsennadel wesentlich grösser sein muss als die Düsenöffnung, um einerseits die Düsenöffnung sicher zu verschliessen und andererseits dem seitlich, radial auf die Nadel wirkenden Druck der Schmelze zu widerstehen. Ein weiterer Nachteil dieser Vorrichtung besteht darin, dass infolge des grossen Querschnitts der Nadel im Vergleich zum Querschnitt der Düsenöffnung, die Vorschubkraft, die nötig ist, um die Nadel im Bruchteil einer Sekunde vorzuschieben, verhältnismässig gross ist, um den auf die Stirnfläche der Düsennadel wirkenden Druck bis zu 2500 bar zu überwinden und daher auch der notwendigerweise leistungsstarke Antrieb der in einem Winkel seitlich des Düsengehäuses viel Raum einnimmt. Heisskanaldüsen mit Verschleißbuchsen sind aus der WO 98 565 57 bekannt.

Eine Aufgabe der vorliegenden Erfindung besteht darin, eine Heisskanaldüse mit einem Nadelventil zu schaffen, bei dem einerseits eine einwandfreie Abdichtung der Düsenöffnung am Ende des Einspritzvorgangs erreicht wird und andererseits die Nadel einen kleinstmöglichen Querschnitt und folglich eine kleine Masse aufweist, die eine geringere Verschlusskraft und damit einen Antrieb für die Nadel benötigt, der wenig Raum einnimmt.
Eine weitere Aufgabe der Erfindung besteht darin, dass die Heisskanaldüse mit geringem Aufwand als Gesamtes aus dem Formwerkzeug von der Rückseite her ausbaubar ist, ohne dass das Formwerkzeug für den Ausbau und Wechsel bzw. Ersatz der Elemente der Heisskanaldüse aus der Spritzgiessmaschine ausgebaut werden muss.

Gelöst wird diese Aufgabe durch eine Heisskanaldüse gemäss den Merkmalen des Patentanspruchs 1. Vorteilhafte Ausgestaltungen der Heisskanaldüse sind in den abhängigen Ansprüchen umschrieben.

Die Heisskanaldüse sowie der gesamte Nadelantrieb lassen sich ohne Demontage des Formwerkzeugs direkt an der Spritzguss-Maschine austauschen, sollte dies wegen eines Schadens notwendig sein. Diese Massnahme benötigt nur wenige Minuten, während der die Spritzgussmaschine stillgelegt werden muss.
Alle Befestigungen für die Heisskanaldüse sowie für den Nadelantrieb sind auf einer Platte untergebracht.
Die gesamte Heisskanaldüse kann aus Stahl hergestellt und ist damit einem kleinen Verschleiss unterworfen.

Die Nadeldichtung liegt ganz vorne im Düsenkopf beziehungsweise im Ausgussloch und nicht im Mittelbereich des Schmelzekanals. Dadurch wird ausgeschlossen, dass Totmaterial zwischen der Dichtung und der Nadel verbleibt und degradiert mit dem Massestrom mitgerissen werden kann. Alle Komponenten ausser dem Grundkörper der Heisskanaldüse sind von der Seite her demontierbar.
Die gegenseitigen Abstände der Heisskanaldüsen können infolge deren minimalen Masse und Abmessungen der Antriebselemente auf ein Minimum reduziert werden, so dass eine grössere Anzahl von Kavitäten pro Flächeneinheit möglich ist.
Die Düsennadel liegt während des Einspritzvorgangs völlig ausserhalb des Schmelzeflusses und wird radial keinen Biegekräften ausgesetzt. Sie kann folglich sehr dünn und damit sehr leicht gebaut sein.

Anhand eines illustrierten Ausführungsbeispiels wird die Erfindung näher erläutert. Es zeigen:
- Figur 1: eine perspektivische Darstellung einer Heisskanaldüse mit einem Nadelantrieb,
- Figur 2: einen Axialschnitt durch die Heisskanaldüse und den Antrieb längs Linie II-II in Figur 1,
- Figur 3: einen Axialschnitt durch die Heisskanaldüse und den Antrieb längs Linie III-III in Figur 1,
- Figur 4: einen vergrösserten Ausschnitt der Düsenspitze in Figur 2 und
- Figur 5: eine perspektivische Darstellung der Heisskanaldüse zwischen einem Formteil und der Aufnahmeplatte.

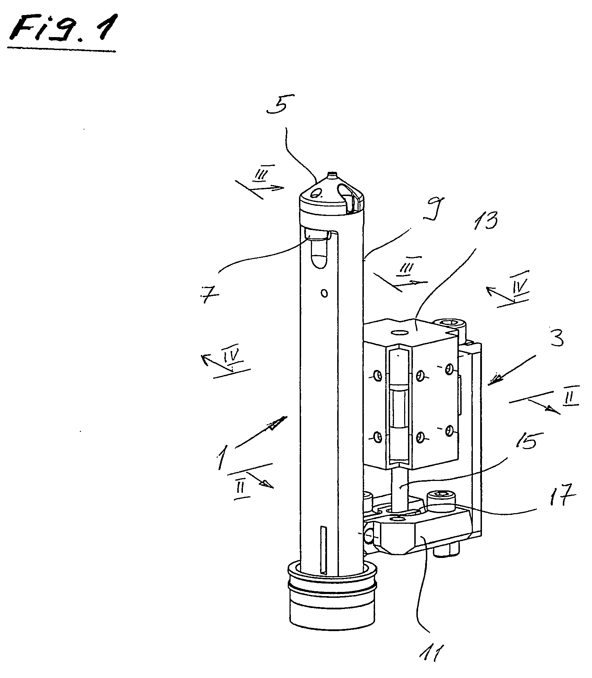

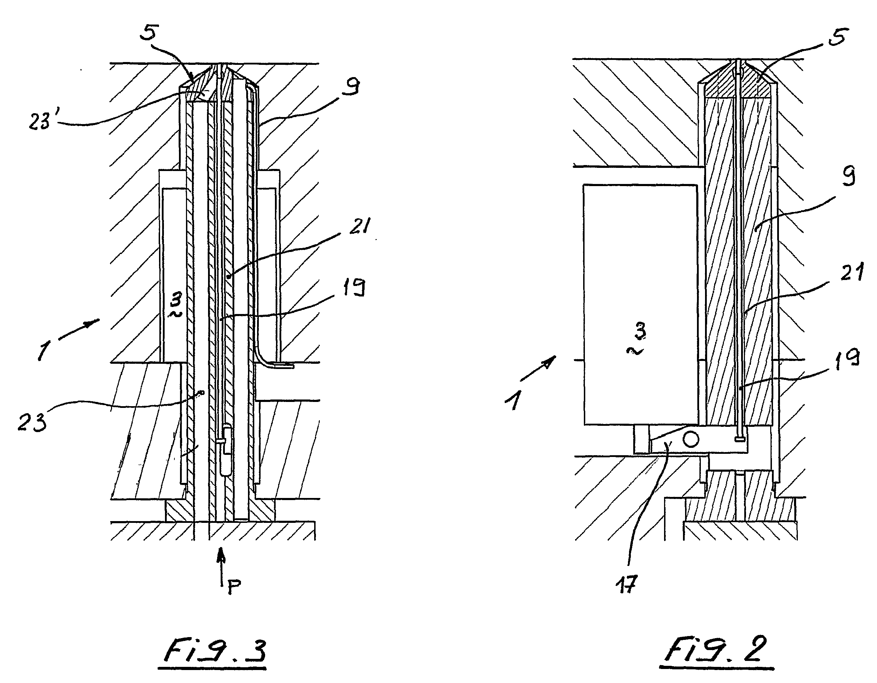

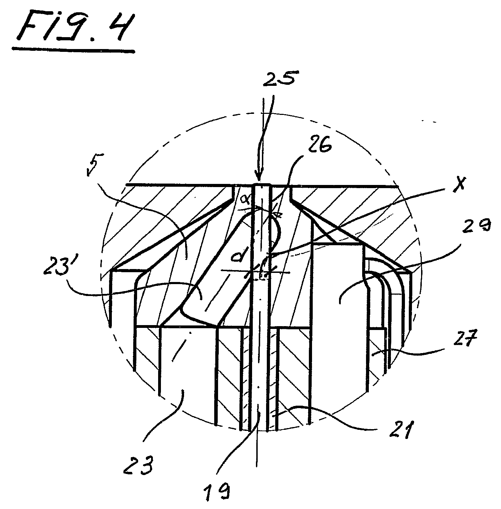

Mit Bezugszeichen 1 ist in Figur 1 eine Heisskanaldüse mit seitlich angeflanschtem Nadelantrieb 3 dargestellt. Deren Düsenspitze 5 ist z.B. mit Schrauben 7 von vorne am zylindrischen Düsenkörper 9 befestigt. Der Nadelantrieb 3 umfasst einen Befestigungssockel 11, an welchem ein Antriebselement 13, beispielsweise ein Elektromagnet, befestigt ist. Der Elektromagnet ist im vorliegenden Beispiel über eine Verbindungsstange 15 gelenkig mit einem zweiarmigen Hebel 17 mit dem hinteren Ende einer Düsennadel 19 verbunden (Figur 2). Alternativ kann der Antrieb auch axial hinter der Düsennadel 19 angeordnet werden (keine Abb.). Die Düsennadel 19 ist spielfrei in einem separaten Führungsrohr 21 im Düsenkörper 9 entlang deren Achse verschiebbar geführt.
Parallel zum Führungsrohr 21 für die Düsennadel 19 ist im Düsenkörper 9 eine Längsbohrung 23 als Kanal für die Kunststoffschmelze ausgebildet (vergleiche Figur 3). Die Längsbohrung 23 durchquert den Düsenkörper 9 in Längsrichtung und verläuft danach in spitzem Winkel α zur Nadelachse bis in die Düsenspitze 5 vor dem zylindrisch ausgebildeten Bereich 26 des Ausgusslochs 25. Das Ausgussloch 25 weist einen Durchmesser auf, der den spielfreien Durchtritt der Düsennadel 19 erlaubt, um den Austritt von Kunststoffschmelze zwischen der Düsennadel 19 und dem Ausgussloch 25 auch bei Drücken von 2500bar sicher zu verhindern. In Figur 4 ist deutlich ersichtlich, dass das Führungsrohr 21 für die Düsennadel 19 beabstandet zum Ausgussloch 25 in den spitzwinklig zur Düsennadelachse verlaufenden Abschnitts 23' der Längsbohrung 23 mündet. Weiter ist ersichtlich, dass ebenfalls parallel zur Achse der Düsennadel 19 einen Heizstab 29 aufzunehmen bestimmtes Rohr 27 angeordnet ist. Der Heizstab 29 ist in Figur 4 dargestellt.

Selbstverständlich kann anstelle eines Nadelantriebs 3 mit einem Magneten, wie oben beschrieben, auch eine solcher mit einem Linearmotor oder ein pneumatischer Antrieb eingesetzt werden.

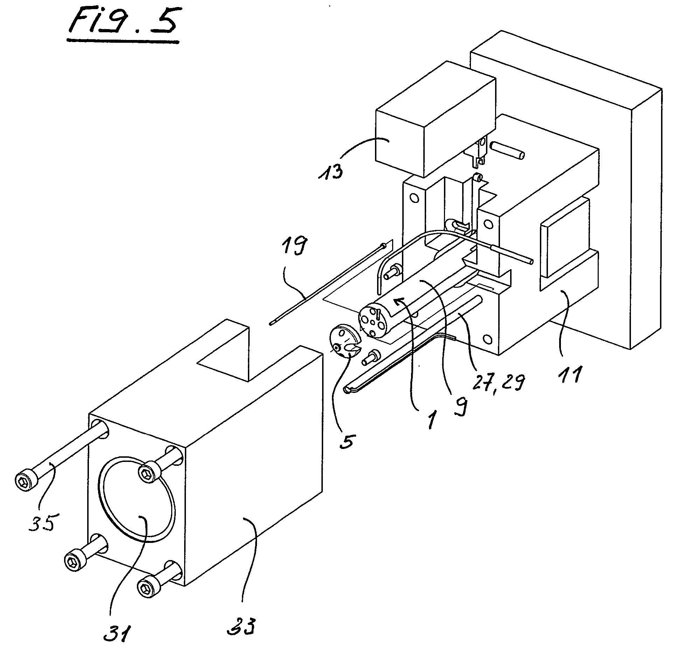

In der Explosionsdarstellung gemäss Figur 5 ist sehr gut ersichtlich, wie die Heisskanaldüse aus dem Formwerkzeug 33 mit der Kavität 31 ausbaubar ist. Durch Lösen der Schrauben 35 in der Formtrennungsebene werden die einzelnen Elemente, insbesondere der Antrieb 13, die Düsennadel 19, die Düsenspitze 5 und auch die Heizung 29 freigelegt und damit austauschbar, ohne dass das Formwerkzeug 33 aus der Spritzgussmaschine ausgebaut werden muss.

Nachfolgend wird die Funktionsweise der Heisskanaldüse 1 erläutert: In Richtung des Pfeils P (Figur 3) wird heisse Kunststoffschmelze durch die Längsbohrung 23 im Düsenkörper 9 parallel zum Führungsrohr 21 für die Düsennadel 19 und anschliessend über den spitzwinklig zur Achse der Düsennadel 19 verlaufenden Bereich 23' der Längsbohrung 23 der Düsenspitze 5 zugeleitet. Die Schmelze mit beispielsweise einem Spritzdruck von 1000 bis 2500 bar verlässt die Düsenspitze 5 durch den zylindrisch ausgebildeten Bereich 26 des Ausgusslochs 25 und gelangt in einen Verteilkanal (nicht dargestellt), der zu der oder den Kavitäten im nicht dargestellten Spritzgusswerkzeug führt.
Während des Einspritzens der Kunststoffschmelze befindet sich die Düsennadel 19 in zurückgezogener Stellung x, in Figur 4 in gebrochenen Linien dargestellt, und somit vollständig ausserhalb des Fliessweges der Schmelze von der Längsbohrung 23 und dem spitzwinklig verlaufenden Bereich 23' zum zylindrischen Bereich 26 des Ausgusslochs 25. Die Schmelze kann ungehindert und insbesondere unverwirbelt zum Ausgussloch 25 fliessen und von dort zu den Kavitäten gelangen kann. Am Ende des Einspritzzyklus' und nach Verstreichen eines Zeitraums für den Aufbau des Nachdrucks ist die Schmelze in der Düsenspitze 5 zum Stillstand gekommen. Danach wird erst die Düsennadel 19 vom Nadelantrieb 3 durch die ruhende Schmelze hindurch in das Ausgussloch 25 eingeschoben und dichtet dieses vollständig nach aussen ab. Die dazu notwendige Kraft ist sehr gering, weil die projizierende Fläche der Nadel 19 nur gerade der Querschnittsfläche des Ausgusslochs 25 entspricht. Die über die gesamte Länge vorzugsweise zylindrisch ausgeführte Düsennadel 19 bildet mit dem Ausgussloch 25 eine axial verlaufende, radial und axial flächenförmige leckfreie Abdichtung (vergleiche Figur 4).

Da der Durchmesser d der Düsennadel 19 nur gerade dem Durchmesser des Ausgusslochs 25 entspricht, ist die in die Schmelze beim Schliessen eindringende projektierte Querschnittsfläche {(d/2)² * π} die kleinstmögliche und im Vergleich zu herkömmlichen Querschnittsflächen von ganz oder teilweise in der Schmelze geführten biegesteifen Düsennadeln 19 mehrfach kleiner. Vorzugsweise weist die Querschnittsfläche der Düsennadel 19 etwa 1/12 der Querschnittsfläche des Polymerkanals beziehungsweise der Längsbohrung 23 auf. Das Querschnittsverhältnis kann auch zwischen 1:5 und 1:15 liegen. Dies bewirkt, dass auch die aufzuwendende Kraft für den Vorschub der Düsennadel 19 in die unter Druck stehende Schmelze nur einen Bruchteil der bisher benötigten Kraft aufzuweisen hat. Als Antrieb kann daher, wie beispielsweise dargestellt, ein viel kleinerer Elektromagnet 13 als bisher verwendet werden, der über die Verbindungsstange 15 und den Hebel 17 ohne Getriebe die Düsennadel 19 annähernd verzögerungsfrei vorzuschieben und danach wieder zurückzuziehen in der Lage ist. Zwei Permanentmagnete können im Antriebselement 13 die Düsennadel 19 in den jeweiligen Endstellungen (Düse "offen"/Düse "zu") stromlos festhalten. Vorzugsweise ist der Durchmesser der Ventilnadel 19 zwischen deren Antrieb und deren vorderen Ende konstant.

Durch das Zurückziehen der Düsennadel 19 vor dem folgenden Einspritzzyklus entsteht ein rohrförmiger Hohlraum in der noch kunststoffgefüllten "Vorkammer" (Bereich 23'). Dieser Hohlraum wird genutzt, um zu Beginn des folgenden Einspritzvorgangs die nachfliessende Schmelze durch diesen rohrförmigen Hohlraum in die Kavität 31 zu lenken. Das heisst es wird dadurch sichergestellt, dass die Kunststoffschmelze ohne festgewordene Rückstände (erkaltete Schmelze) direkt in die Kavität 31 gelangt, und zwar unmittelbar vom Beginn des Einspritzvorgangs an. Die Schmelze gelangt aus dem spitzwinklig verlaufenden Bereich 23' der Längsbohrung 23 direkt zum zylindrischen Bereich 26 des Ausgusslochs 25 ohne Verwirbelung in einer Vorkammer.

### Legende der Bezugszeichen

- 1: Heisskanaldüse
- 3: Nadelantrieb
- 5: Düsenspitze
- 7: Schrauben
- 9: Düsenkörper
- 11: Befestigungssockel
- 13: Antriebselement
- 15: Verbindungsstange
- 17: Hebel
- 19: Düsennadel
- 21: Führungsrohr
- 23: Längsbohrung
- 25: Ausgussloch
- 26: zylindrischer Bereich
- 27: Rohr für Heizung
- 29: Heizung
- 31: Kavität
- 33: Formwerkzeug
- 35: Schrauben

## Patentansprüche

1. Heisskanaldüse (1) zum Einspritzen von Kunststoff in ein Formwerkzeug (33), mit einem Nadelventil zum Verschliessen eines Ausgusslochs (25) am Ende des Einspritzvorgangs mit einer Ventilnadel (19) sowie mit einem Antrieb (3) für die Ventilnadel (19),
**dadurch gekennzeichnet, dass**
- die Düsennadel (19) koaxial zur Achse des Ausgusslochs (25) der Heisskanaldüse (1) in einem Führungsrohr (21) axial geführt verschiebbar in einem Düsenkörper (5) gelagert ist,
- eine Längsbohrung (23) für die Schmelze im Wesentlichen achsparallel zur Achse der Düsennadel (19) und radial ausserhalb dem Führungsrohr (21) der Düsennadel (19) verläuft, wobei ein Bohrungsabschnitt (23') am Ende der Längsbohrung (23) in einem spitzen Winkel (α) zur Achse der Längsbohrung (23) verläuft und eine Verbindung zwischen der Längsbohrung (23) und dem Eingang zum zylindrischen Bereich (26) des Ausgusslochs (25) herstellt.

2. Heisskanaldüse nach Anspruch 1, **dadurch gekennzeichnet, dass** der Durchmesser (d) der Düsennadel (19) dem Durchmesser des zylindrischen Bereichs (26) im Ausgussloch (25) entspricht und im Wesentlichen spielfrei axial in die Bohrung im zylindrischen Bereich (26) des Ausgusslochs (25) einschiebbar ist.

3. Heisskanaldüse nach einem der Ansprüche 1 oder 2, **dadurch gekennzeichnet, dass** der Durchmesser (d) der Düsennadel (19) zwischen dem Antrieb der Düsennadel (19) und deren vorderen Ende im Wesentlichen konstant ist.

4. Heisskanaldüse nach einem der Ansprüche 1 bis 3, **dadurch gekennzeichnet, dass** das vordere Ende der Düsennadel (19) während des Einspritzvorgangs nicht in den Raum am Ende des Abschnitts (23') der Längsbohrung (23) dem Eingang zum zylindrischen Bereich (26) des Ausgusslochs (25) hineinragt.

5. Heisskanaldüse nach einem der Ansprüche 1 bis 4, **dadurch gekennzeichnet, dass** der Querschnitt der Düsennadel (19) im Verhältnis zum Querschnitt der Längsbohrung (23) für die flüssige Schmelze 1:5 bis 1:15 beträgt.

6. Heisskanaldüse nach Anspruch 5, **dadurch gekennzeichnet, dass** das Querschnittsverhältnis 1:12 beträgt.

7. Heisskanaldüse nach einem der Ansprüche 1 bis 6, **dadurch gekennzeichnet, dass** die Elemente der Heisskanaldüse (1) aus dem Formwerkzeug ausbaubar und austauschbar sind, ohne Ausbau des Formwerkzeugs aus der Spritzgussmaschine.

## Claims

1. A hotrunner nozzle (1) for injecting plastic material into a moulding tool (33) comprising a needle valve for closing a discharge opening (25) at the end of the injection process which comprises a valve needle (19) and a drive (3) for the valve needle (19),
**characterized in that**
the nozzle needle (19) is displaceably mounted in a nozzle body (5) guided axially in a guide tube (21) coaxial to the axis of the discharge opening (25) of the hotrunner nozzle (1),
a longitudinal bore (23) for the melt runs substantially axis parallel to the axis of the nozzle needle (19) and radially outside of the guide tube (21) of the nozzle needle (19), wherein a bore section (23') at the end of the longitudinal bore (23) runs in an acute angle (α) to the axis of the longitudinal bore (23) and establishes a connection between the longitudinal bore (23) and the inlet to the cylindrical region (26) of the discharge opening (25).

2. The hotrunner nozzle according to Claim 1, **characterized in that** the diameter (d) of the nozzle needle (19) corresponds to the diameter of the cylindrical region (26) in the discharge opening (25) and can be axially inserted substantially without play into the bore in the cylindrical region (26) of the discharge opening (25).

3. The hotrunner nozzle according to one of Claims 1 or 2, **characterized in that** the diameter (d) of the nozzle needle (19) is substantially constant between the drive of the nozzle needle (19) and the front end thereof.

4. The hotrunner nozzle according to one of Claims 1 through 3, **characterized in that** the front end of the nozzle needle (19) does not protrude into the space at the end of the section (23') of the longitudinal bore (23) [which is] the inlet to the cylindrical region (26) of the discharge opening (25) during the injection process.

5. The hotrunner nozzle according to one of Claims 1 through 4, **characterized in that** the cross section of the nozzle needle (19) is 1:5 to 1:15 in relation to the cross section of the longitudinal bore (23) for the liquid melt.

6. The hotrunner nozzle according to Claim 5, **characterized in that** the cross-sectional ratio is 1:12.

7. The hotrunner nozzle according to one of Claims 1 through 6, **characterized in that** the elements of the hotrunner nozzle (1) can be removed and exchanged from the moulding tool without removing the moulding tool from the injection moulding machine.

## Revendications

1. Buse pour conduite chauffante (1) pour la pulvérisation de matière plastique dans un outil de mise en forme (33), avec une soupape à pointeau pour fermer un orifice de sortie (25) à l'issue du procédé d'injection avec un pointeau (19) ainsi qu'une transmission (3) pour le pointeau (19),
**caractérisée en ce que** :
le pointeau (19) est positionné de façon coaxiale à l'axe de l'orifice de sortie (25) de la buse pour conduite chauffante (1) dans une conduite d'acheminement (21) axialement mobile dans un corps de buse (5),
un orifice longitudinal (23) pour le plastique fondu court essentiellement parallèle à l'axe du pointeau (19) et radialement hors de la conduite d'acheminement (21) du pointeau (19), une section de l'orifice (23') à l'extrémité de l'orifice longitudinal (23) étant à un angle aigu (α par rapport à l'axe de l'orifice longitudinal (23), et créant une liaison entre l'orifice longitudinal (23) et l'entrée du domaine cylindrique (26) de l'orifice de sortie (25).

2. Buse pour conduite chauffante selon la revendication 1, **caractérisé en ce que** le diamètre (d) du pointeau (19) correspond au diamètre du domaine cylindrique (26) dans l'orifice de sortie (25) et est mobile axialement, fondamentalement sans jeu, dans l'orifice dans le domaine cylindrique (26) de l'orifice de sortie (25).

3. Buse pour conduite chauffante selon la revendication 1 ou 2, **caractérisé en ce que** le diamètre (d) du pointeau (19) est essentiellement constant entre l'entraînement du pointeau (19) et son extrémité avant.

4. Buse pour conduite chauffante selon l'une quelconque des revendications 1 à 3, **caractérisée en ce que** l'extrémité avant du pointeau (19) ne fait pas saillie pendant le processus d'injection dans l'espace à l'extrémité de la section (23') de l'orifice longitudinal (23) par rapport à l'entrée du domaine cylindrique (26) de l'orifice de sortie (25).

5. Buse pour conduite chauffante selon l'une quelconque des revendications 1 à 4, **caractérisée en ce que** la section transversale du pointeau (19) est dans un rapport de 1:5 à 1:15 par rapport à la section transversale de l'orifice longitudinal (23) pour le plastique fondu.

6. Buse pour conduite chauffante selon la revendication 5, **caractérisée en ce que** le rapport de sections transversales est de 1:12.

7. Buse pour conduite chauffante selon l'une quelconque des revendications 1 à 6, **caractérisée en ce que** les éléments de la buse de conduite (1) sont démontables et interchangeables depuis l'outil de mise en forme, sans extraire l'outil de mise en forme de la machine de moulage par injection.
